**Europäisches Patentamt**

**European Patent Office**

**Office européen des brevets**

(19)

(11) Veröffentlichungsnummer: **0 099 001**

**A2**

(12) # EUROPÄISCHE PATENTANMELDUNG

(21) Anmeldenummer: 83106085.0

(22) Anmeldetag: 22.06.83

(51) Int. Cl.³: **G 01 G 19/04**

(30) Priorität: 16.07.82 DE 3226740

(43) Veröffentlichungstag der Anmeldung:
25.01.84 Patentblatt 84/4

(84) Benannte Vertragsstaaten:
AT BE CH DE FR GB IT LI LU NL SE

(71) Anmelder: Messmetallurgie GmbH
Friedrichstrasse 40
D-5802 Wetter (Ruhr)(DE)

(72) Erfinder: Krettek, Otmar, Dr.
Höhenweg 70
D-5100 Aachen(DE)

(72) Erfinder: Pietzsch, Udo, Dipl.-Ing.
Schnikvenn 14
D-5106 Roetgen(DE)

(72) Erfinder: Schwab, Wolfram
Oppener Strasse 147
D-5102 Würselen(DE)

(74) Vertreter: Niemann, Uwe, Dr.-Ing.
Ahornstrasse 41
D-4300 Essen 1(DE)

(54) **Anordnung zum Messen der Radlasten schnellfahrender Schienenfahrzeuge und Verfahren sowie Vorrichtung zum Bestimmen der Radlasten mit einer solchen Anordnung.**

(57) Die Erfindung betrifft eine Anordnung zum Messen der Radlasten schnellfahrender Schienenfahrzeuge mit wenigstens einer Meßstelle und wenigstens einem am Steg einer Schiene in Höhe der neutralen Faser befestigten Dehnungsmeßstreifen. Eine zuverlässige Bestimmung der Radlasten wird möglich, wenn die Hauptwirkungsrichtung des Dehnungsmeßstreifens orthogonal zur neutralen Faser (vertikal) angeordnet ist und wenn zur Bestimmung der Radlasten beim Überlauf eines Rades über eine Meßstelle deren Meßsignal lediglich oberhalb eines bestimmten Schwellenwertes erfaßt wird, wobei das erfaßte Meßsignal durch ein Ausgleichspolynom angenähert wird und dann aus dem Schwellenwert sowie dem Abstand von Schwellenwert und Maximum des Ausgleichspolynoms die Radlast ermittelt wird.

Fig. 1

EP 0 099 001 A2

Anordnung zum Messen der Radlasten schnellfahrender
Schienenfahrzeuge und Verfahren sowie Vorrichtung
zum Bestimmen der Radlasten mit einer solchen Anordnung

Die Erfindung betrifft eine Anordnung ,zum Messen der Radlasten schnellfahrender Schienenfahrzeuge mit wenigstens einer Meßstelle und wenigstens einem am Steg einer Schiene in Höhe der neutralen Faser befestigten Dehnungsmeßstreifen. Die Erfindung betrifft auch ein Verfahren sowie eine Vorrichtung zum Bestimmen der Radlasten mit einer derartigen Anordnung.

Die zunehmende Automatisierung in Verbindung mit einer Erhöhung der Fahrgeschwindigkeit und der Zuladung von Eisenbahnfahrzeugen erfordert eine möglichst einfach durchzuführende Kontrolle des jeweiligen Beladungszustandes eines Eisenbahnfahrzeuges. Bestehende Sicherheitsvorschriften schränken die Radlasten einer Achse beispielsweise von Güterwagen ein. Auch für das Verhältnis der Radlasten einer Achse gibt es bestimmte Vorschriften. Eine weitere Einschränkung bei der Beladung gilt für das Verhältnis der Achsen und der Drehgestelle untereinander. Eine Überschreitung dieser Einschränkungen kann zu Schäden an Gleis und Fahrzeug führen, - im schlimmsten Fall zu einer Entgleisung.

Früher hat man sogenannte Brückenwagen verwendet, auf denen die Eisenbahnfahrzeuge einzeln und im Stillstand gewogen wurden. Das war zeit- und personalaufwendig. In jüngerer Zeit ist man deshalb dazu übergegangen, Wagen zu konstruieren, die während des Meßvorganges langsam überfahren werden konnten, ohne daß die Waggons entkoppelt werden mußten. Auch das erfordert besondere Maßnahmen, insbesondere muß ein Zug mit geringer Geschwindigkeit über ein besonderes Gleis gefahren werden, wenn das Gewicht der einzelnen Waggons bestimmt werden soll. Eine Bestimmung der Radlasten ist auch damit nicht möglich.

Deshalb hat man vorgeschlagen, die Radlasten bei fahrenden Zügen unmittelbar zu messen, und zwar über die Verformung der Schiene. Dazu wurden beispielsweise an die Unterseite des Schienenfußes Dehnungsmeßstreifen geklebt, mit denen der jeweilige Biegezustand der Schiene ermittelt werden konnte. Das führte jedoch zu ungenauen Ergebnissen, weil der Biegezustand der Schiene nicht nur von der Last des gerade darüberfahrenden Rades, sondern auch von der Art der Lagerung der Schwellen und damit von der sogenannten Bettungszahl abhängig ist.

Ein weiterer Vorschlag ging dahin, nicht die durch Biegung verursachten Dehnungen der Schiene zu messen, sondern die durch Schubspannungen verursachten Dehnungen. Dazu wurden Dehnungsmeßstreifen im Bereich der neutralen Fasern an den Schienensteg geklebt, und zwar unter einem Winkel von 45° zur neutralen Faser. Aber auch dadurch können Biegungseinflüsse nicht eliminiert werden. Hinzu kommt, daß die Dehnungsmeßstreifen sowohl unter einem positiven wie auch unter einem negativen Winkel von 45° geklebt werden müssen, so daß die betreffende Meßstelle eine verhältnismäßig große endliche Breite besitzt, bei der sich die Schubspannungsverteilung über die Länge während des Überlaufs durch das Rad ständig ändert. Das führt zu Problemen bei der Ermittlung der signifikanten Meßwerte.

Demgegenüber liegt der Erfindung die Aufgabe zugrunde, eine Anordnung sowie ein Verfahren und eine Vorrichtung der eingangs beschriebenen Gattung anzugeben, die eine zuverlässige Bestimmung der Radlasten ermöglicht.

Diese Aufgabe wird mit einer Anordnung der eingangs beschriebenen Gattung gelöst, die dadurch gekennzeichnet ist, daß die Hauptwirkungsrichtung des Dehnungsmeßstreifens orthogonal zur neutralen Faser (vertikal) angeordnet ist.

Bei der erfindungsgemäßen Anordnung werden Dehnungen gemessen, die nicht aus Biegungen oder Schubspannungen resultieren, sondern aus Stauchungen des Schienenstegs unter der Wirkung des überlaufenden Rades. Diese Stauchungen entsprechen aber den gesuchten und zu ermittelnden Radlasten unmittelbar. Insofern können erfindungsgemäß die Radlasten auf direktem Wege bestimmt werden. Die Bestimmung ist auch genauer, weil die Breite einer Meßstelle praktisch nur durch die Breite eines Dehnungsmeßstreifens bestimmt ist, der auf den Schienensteg mit seiner Hauptwirkungsrichtung vertikal orientiert aufgeklebt ist.

Da zum Messen der Radlasten mit der erfindungsgemäßen Anordnung Biegungen oder Schubspannungsverteilungen der Schiene nicht benötigt werden, kann die Meßstelle grundsätzlich beliebig angeordnet werden. Vorzugsweise sollte die Meßstelle aber über einer Schwelle angeordnet sein, weil dort der Einfluß von Störspannungen verhältnismäßig gering ist, und infolgedessen geringfügige Fehler in der Geometrie des Dehnungsmeßstreifens oder in seiner lokalen Anordnung sich nicht oder nur geringfügig auswirken können.

Es ist zweckmäßig, wenn im Bereich jeder Meßstelle auf beiden Seiten des Stegs und symmetrisch zur Längsmittelebene der Schiene Dehnungsstreifen angeordnet sind, weil dadurch der Einfluß von Biegungen des Schienenprofils um die Schienenlängsachse kompensiert werden kann.

Sofern nötig, kann jedem Dehnungsmeßstreifen ein Temperaturkompensations-Dehnungsmeßstreifen zugeordnet sein. Das kann aber überflüssig sein, wenn temperaturunabhängige Dehnungsmeßstreifen verwendet werden, wie sie neuerdings auf dem Markt angeboten werden.

Es ist bekannt, daß bei einem fahrenden Eisenbahnfahrzeug den statischen Radlasten nicht nur hochfrequente regellose Störungen überlagert sind, sondern auch niederfrequente Störungen, die unter dem Begriff "Sinuslauf" zusammengefaßt sind. Spektralanalysen haben gezeigt, daß im Geschwindigkeitsbereich von 20 bis 100 km/h die wichtigsten Schwingungen Wellenlängen zwischen 9 und 16 m besitzen. Dementsprechend reicht normalerweise eine einzige Meßstelle nicht aus, um die Radlast des überlaufenden Rades zuverlässig zu ermitteln. Das gelingt jedoch, wenn in Schienenlängsrichtung mehrere Meßstellen im Abstand voneinander angeordnet sind. Aus den dann zur Verfügung stehenden mehreren Meßsignalen läßt sich die tatsächliche Radlast zuverlässig ermitteln.

Der Abstandsraster der einzelnen Meßstellen sollte vorzugsweise ca. 1 m oder mehr betragen. Mit Rücksicht auf die eingangs genannten Wellenlängen der wichtigsten Schwingungen sollte die Länge der Meßstrecke insgesamt wenigstens 12 m betragen.

Wenn man mehrere Meßstellen zu einer Meßstrecke zusammenfaßt, lassen sich Ungenauigkeiten oder Toleranzen beim Anbringen der einzelnen Dehnungsmeßstreifen kaum vermeiden. Um die Auswertung der jeweiligen Meßsignale zu erleichtern, empfiehlt es sich deshalb, die Symmetrieachse jedes Dehnungsmeßstreifens etwas oberhalb der neutralen Faser anzuordnen. Dann wirken sich nämlich Einflüsse von Biegungen oder anderer Art bei allen Meßstellen in gleicher Richtung aus, beispielsweise im Sinne einer Vergrößerung oder einer Verkleinerung des betreffenden Meßsignals.

Zur Bestimmung der Radlast des eine Meßstelle überlaufenden Rades stehen die Meßsignale der betreffenden Meßstelle zur Verfügung. Diese Meßsignale haben jedoch eine verhältnismäßig komplizierte Form, die in grober Annäherung ungefähr der Gauß'schen Glockenkurve entspricht. Theoretische Überlegungen haben jedoch gezeigt, daß die Funktion des Meßsignals wesentlich komplizierter aufgebaut ist und im wesentlichen dem Produkt aus einer Exponentialfunktion und der Summe von Kreisfunktionen entspricht. Dieser theoretischen Funktion sind die oben erwähnten Störungen überlagert.

Ein wichtiger Vorschlag der Erfindung im Hinblick auf die Bestimmung der Radlasten aus den Meßsignalen der obengenannten Anordnung geht dahin, beim Überlauf eines Rades über eine Meßstelle deren Meßsignal lediglich oberhalb eines bestimmten Schwellenwertes zu erfassen, das erfaßte Meßsignal durch ein Ausgleichspolynom anzunähern und dann aus dem Schwellenwert sowie dem Abstand von Schwellenwert und Maximum des Ausgleichspolynoms die Radlast zu ermitteln.

Erfindungsgemäß wird folglich das anfallende Meßsignal in zwei Signalanteile zerlegt, nämlich einen durch den Schwellenwert definierten Signalanteil und einen veränderlichen Signalanteil, der von dem oberhalb des Schwellenwertes liegenden Funktionsabschnitt des Signals gebildet wird. Es hat sich gezeigt, daß überraschenderweise dieser veränderliche Signalanteil mit guter Genauigkeit durch ein verhältnismäßig einfaches Ausgleichspolynom, insbesondere eine Ausgleichsparabel, angenähert werden kann. Der Schwellenwert selbst wird so gelegt, daß er etwa einem Drittel bis der Hälfte der größten zu erwartenden Radlast entspricht. Durch Zerlegung des an einer Meßstelle anfallenden Meßsignals in einen konstanten und in einen veränderlichen Signalanteil sowie durch anschließende Verknüpfung dieser beiden Signalanteile nach Verarbeitung bzw. Filterung des veränderlichen Signalanteils gelingt es jedenfalls, bei vertretbarem Aufwand für die Auswertung der Meßsignale Radlasten auch schnellfahrender Schienenfahrzeuge zuverlässig zu bestimmen.

Dazu eignet sich insbesondere eine Vorrichtung, die gekennzeichnet ist durch einen Meßverstärker für jede Meßstelle, durch einen dem Meßverstärker nachgeschalteten Analog-Digital-Wandler, einen auf den Schwellenwert einstellbaren Trigger und einen vom Trigger betätigten Zähler sowie durch einen Speicher für die zu erfassenden digitalisierten Meßwerte und deren zugeordnete Zählimpulse. Aus dem Aufbau dieser Vorrichtung wird deutlich, daß die anfallenden Meßsignale nach Verstärkung zunächst digitalisiert werden, wobei der Trigger vor oder hinter dem Analog-Digital-Wandler eingesetzt sein kann. Jedenfalls werden die digitalisierten Meßwerte des veränderlichen Signalanteils zusammen mit Zählimpulsen des gleichzeitig vom Trigger geschalteten Zählers einem Speicher und von dort der weiteren Verarbeitung zugeführt. Bei On-Line-Verarbeitung gehört der Speicher einem Mikroprozessor an, mit dem die Daten unmittelbar verarbeitet werden, so daß die gesuchten Radlasten unmittelbar nach Überlauf der Meßstrecke zur Verfügung stehen.

Im folgenden wird ein in der Zeichnung dargestelltes Ausführungsbeispiel der Erfindung erläutert; es zeigen:

Fig. 1   in schematischer Darstellung die Seitenansicht eines Schienenabschnittes mit einer Meßstelle,

Fig. 2   in schematischer Darstellung die Wiedergabe eines typischen Meßsignals an dieser Meßstelle,

Fig. 3 in schematischer Darstellung ein Blockschaltbild einer Vorrichtung zur Bestimmung der Radlasten aus dem anfallenden Meßsignal,

Fig. 4 in schematischer Darstellung die Ansicht einer
Meßstrecke mit mehreren Meßstellen an einer
Schiene.

Die in der Zeichnung dargestellte Anordnung dient zum
Messen und Bestimmen der Radlasten schnellfahrender
Schienenfahrzeuge. An einer Schiene 1 mit Schienenkopf 2, Schienensteg 3 und Schienenfuß 4 ist beidseitig des Steges 3 in Höhe der neutralen Faser 5 jeweils
ein temperaturunabhängiger Dehnungsmeßstreifen 6 so
befestigt, daß sich seine Hauptwirkungsrichtung senkrecht zur neutralen Faser 5, d.h. vertikal, erstreckt.
Die Dehnungsmeßstreifen 6 sind im übrigen so befestigt,
daß sie bezüglich ihrer mäanderförmigen Windungen im
wesentlichen symmetrisch zur neutralen Faser 5 angeordnet sind.

Nicht dargestellt ist, daß sich die Dehnungsmeßstreifen
6 und die dadurch definierte Meßstelle direkt oberhalb
einer Schwelle befinden.

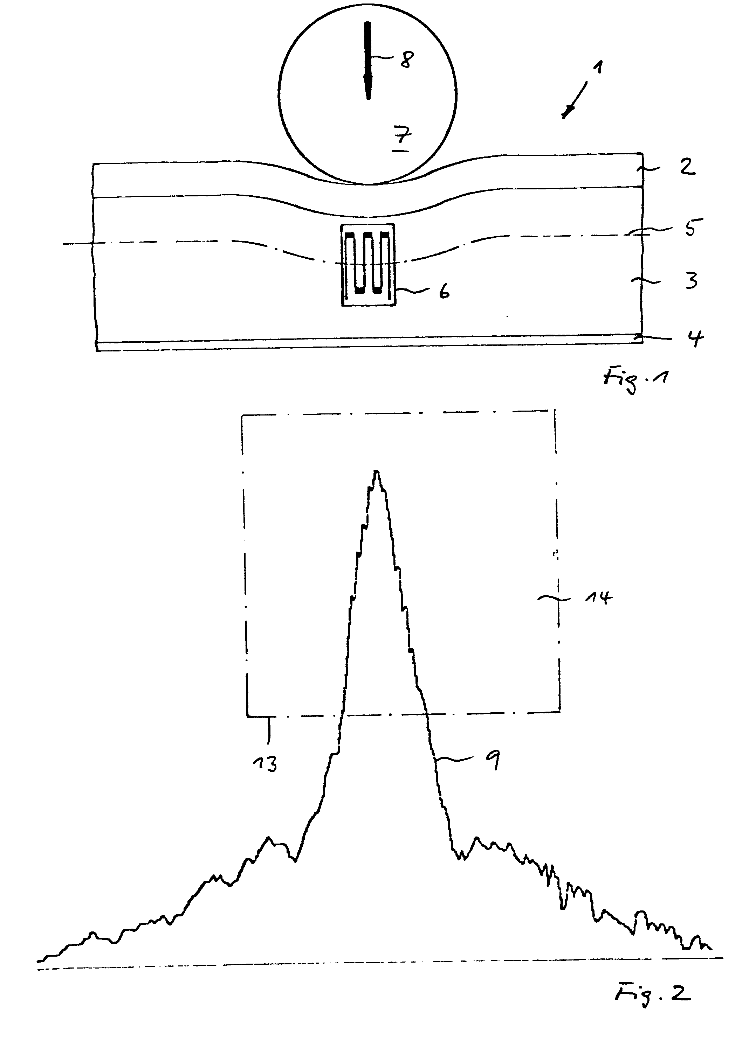

Wird die Meßstelle der Schiene 1 von einem Rad 7 mit
zugeordneter Radlast 8 überlaufen, dann wird die Schiene 1 im Bereich der Meßstelle, wie auch an anderen
Stellen beim Überlauf durch das Rad 7, so verformt, wie
das in Figur 1 übertrieben dargestellt ist. Anders
ausgedrückt, wird die Schiene 1 und insbesondere ihr
Steg 3 in vertikaler Richtung gestaucht. Die dabei auftretenden Dehnungen werden von den Dehnungsmeßstreifen
6 erfaßt und in Meßsignale umgesetzt.

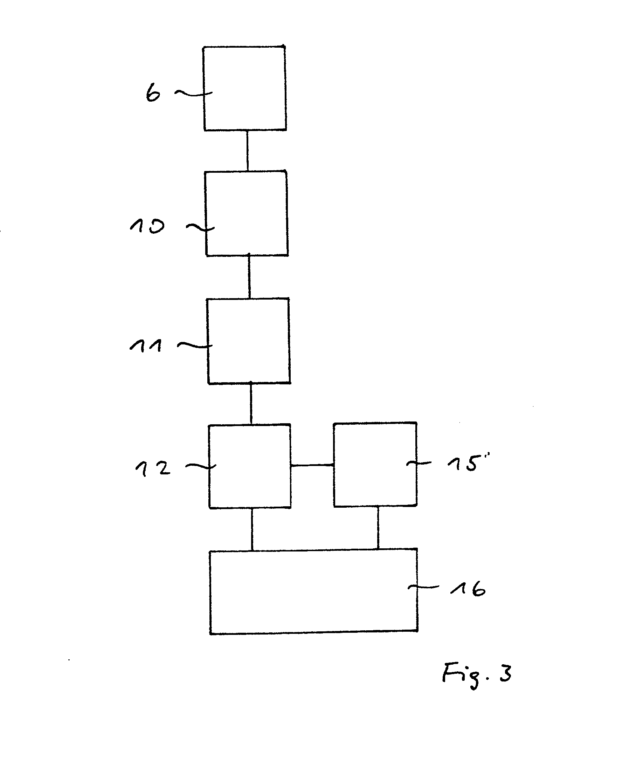

Ein typischer Verlauf eines Meßsignals 9 beim Überlauf
eines Rades 7 über eine Meßstelle ist in Figur 2 dargestellt. Man erkennt eine von hochfrequenten Störungen überlagerte Funktion, die nach theoretischen Überlegungen ein Produkt aus einer Exponentialfunktion und der Summe von Kreisfunktionen ist. Maßgebend für die Bestimmung der gewünschten Radlast 8 ist jedoch lediglich das Maximum dieser Funktion, welches jedoch auch gestört ist, wenn auch in geringerem Maße als die übrigen Funktionsabschnitte.

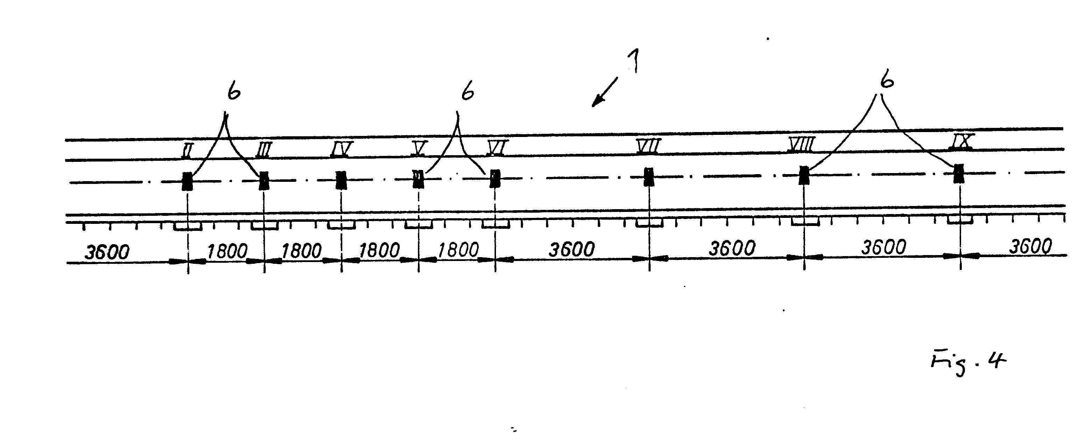

Um das Maximum des Meßsignals 9 und damit die gesuchte Radlast 8 zuverlässig bestimmen zu können, wird das Meßsignal 9 zunächst in zwei Signalanteile zerlegt, und zwar in einen konstanten Signalanteil und einen veränderlichen Signalanteil. Dazu kann man mit einer Vorrichtung arbeiten, wie sie schematisch in Figur 3 dargestellt ist. Zunächst wird das von dem Dehnungsmeßstreifen 6 abgegebene Meßsignal einem Meßverstärker 10 zugeführt, der gegebenenfalls auch die übliche Brückenschaltung für mehrere Dehnungsmeßstreifen 6 enthält. Das verstärkte Meßsignal wird dann in einem Analog-Digital-Wandler 11 digitalisiert. In den Signalfluß ist ferner ein Trigger 12 geschaltet, der auf einen vorbestimmten Schwellenwert 13 eingestellt ist. Dieser Trigger 12 trennt folglich das Meßsignal in einen konstanten, durch den Schwellenwert 13 definierten Signalanteil und einen veränderlichen Signalanteil, der in Figur 2 im strichpunktiert angegebenen Fenster 15 verbleibt. - Es versteht sich, daß der Trigger 12 auch dem Analog-Digital-Wandler 11 vorgeschaltet sein kann, so daß dem Wandler lediglich die im Fenster 14 verbleibenden Signalanteile zugeführt werden.

Jedenfalls schaltet der Trigger 12 bei Überschreiten des Schwellenwertes 13 gleichzeitig auch einen Zähler 15 ein, der jedem der digitalisierten Meßwerte einen Zählimpuls bzw. eine Kennzahl zuordnet.

Die digitalisierten Meßwerte und ihre zugeordneten Kennzahlen werden dann in einen Speicher überführt, der beim dargestellten Ausführungsbeispiel zu einer EDV-Anlage 16 gehört, welche die anfallenden Meßwerte unmittelbar verarbeitet.

Die Verarbeitung der digitalisierten Meßwerte erfolgt dadurch, daß der veränderliche Signalanteil im Fenster 14 durch ein Ausgleichspolynom, insbesondere eine Ausgleichsparabel, angenähert wird. Mathematische Verfahren dazu stehen ebenso zur Verfügung, wie hinreichend schnellarbeitende EDV-Anlagen, so daß ein On-Line-Betrieb möglich ist. Nach Ermittlung des Ausgleichspolynoms und Bestimmung des Maximums relativ zum Schwellenwert 13 wird schließlich aus der Summe des Schwellenwertes 13 und dem Abstand von Schwellenwert 13 und Maximum des Ausgleichspolynoms die gesuchte Radlast 8 bestimmt.

Da die Radlasten schnellfahrender Schienenfahrzeuge nicht nur durch hochfrequente Störungen, sondern auch durch niederfrequente Störungen überlagert sind, wird man im allgemeinen eine Meßstrecke aus mehreren Meßstellen einrichten, wie das in Figur 4 dargestellt ist. Die in Figur 4 dargestellte Meßstrecke besteht aus insgesamt 10, mit römischen Ziffern bezeichneten Meßstellen. Der Abstand der einzelnen Meßstellen beträgt jeweils 1800 mm bzw. 3600 mm. Der Abstand der Meßstellen ergibt sich aus einer Reihe von bekannten Messungen und deren Auswertung durch Spektralanalyse, die ergeben hat, daß die Schwingungslänge der wichtigsten niederfrequenten Schwingungen zwischen 9 und 16 m liegt.

Wenn das Rad eines Schienenfahrzeuges sämtliche Meßstellen der dargestellten Meßstrecke passiert hat, ist für jede Meßstelle eine bestimmte Radlast ermittelt worden. Die an verschiedenen Meßstellen ermittelten Radlasten sind unterschiedlich. Aus ihnen kann jedoch die tatsächliche Radlast nach bekanntem Verfahren ermittelt werden.

Dr.-Ing. **Uwe Niemann**
Patentanwalt

Ahornstraße 41, 4300 Essen 1
Telefon (02 01) 47 13 03

Patentanwalt Dr. Ing. U. Niemann Ahornstr. 41 4300 Essen 1

Ihr Zeichen    Mein Zeichen   83 140   Datum
Betr. Firma Meßmetallurgie GmbH, Friedrichstr. 40, 5802 Wetter 1

## A n s p r ü c h e

1. Anordnung zum Messen der Radlasten schnellfahrender Schienenfahrzeuge mit wenigstens einer Meßstelle und wenigstens einem am Steg einer Schiene in Höhe der neutralen Faser befestigten Dehnungsmeßstreifen, d a d u r c h  g e - k e n n z e i c h n e t , daß die Hauptwirkungsrichtung des Dehnungsmeßstreifens (6) orthogonal zur neutralen Faser (5) (vertikal) angeordnet ist.

2. Anordnung nach Anspruch 1, d a d u r c h  g e k e n n - z e i c h n e t , daß der Dehnungsmeßstreifen (6) über einem festen Widerlager oder einer Schwelle angeordnet ist.

3. Anordnung nach Anspruch 1 oder 2, d a d u r c h  g e - k e n n z e i c h n e t , daß im Bereich jeder Meßstelle auf beiden Seiten des Stegs (3) und symmetrisch zur Längsmittelebene der Schiene (1) Dehnungsmeßstreifen (6) angeordnet sind.

4. Anordnung nach einem der Ansprüche 1 - 3, d a d u r c h  g e k e n n z e i c h n e t , daß jedem Dehnungsmeßstreifen (6) ein Temperaturkompensations-Dehnungsmeßstreifen zugeordnet ist.

5. Anordnung nach einem der Ansprüche 1 - 3, g e k e n n -
z e i c h n e t   d u r c h  die Verwendung temperaturunabhängiger Dehnungsmeßstreifen (6).

6. Anordnung nach einem der Ansprüche 1 - 5, d a d u r c h
g e k e n n z e i c h   n e t , daß in Schienenlängsrichtung mehrere Meßstellen (I - X) im Abstand voneinander
angeordnet sind.

7. Anordnung nach Anspruch 6, d a d u r c h   g e k e n n -
z e i c h n e t , daß der Abstandsraster wenigstens
1 m beträgt.

8. Anordnung nach Anspruch 7 oder 8, d a d u r c h   g e -
k e n n z e i c h n e t , daß die Länge der Meßstrecke
wenigstens 12 m beträgt.

9. Anordnung nach einem der Ansprüche 1 - 8, d a d u r c h
g e k e n n z e i c h n e t , daß die Symmetrieachse
der Dehnungsmeßstreifen (6) etwas oberhalb der neutralen
Faser (5) angeordnet ist.

10. Verfahren zum Bestimmen der Radlasten mit einer Anordnung nach einem der Ansprüche 1 - 9, d a d u r c h
g e k e n n z e i c h n e t , daß beim Überlauf eines
Rades (7) über eine Meßstelle deren Meßsignal (9) lediglich oberhalb eines bestimmten Schwellenwertes (13) erfaßt wird, daß das erfaßte Meßsignal (9) durch ein Ausgleichspolynom angenähert wird und daß dann aus dem
Schwellenwert (13) sowie dem Abstand von Schwellenwert
(13) und Maximum des Ausgleichspolynoms die Radlast (8)
ermittelt wird.

11. Verfahren nach Anspruch 10, d a d u r c h   g e k e n n -
z e i c h n e t , daß das erfaßte Meßsignal (9) durch eine Ausgleichsparabel angenähert wird.

- 3 -                              0099001

12. Verfahren nach Anspruch 10 oder 11, g e k e n n z e i c h -
n e t   d u r c h   einen Schwellenwert (13), der etwa einem
Drittel bis der Hälfte der größten zu erwartenden Radlast
(8) entspricht.

13. Vorrichtung zur Durchführung des Verfahrens nach einem der
Ansprüche 10 - 12, g e k e n n z e i c h n e t   d u r c h
einen Meßverstärker (10) für jede Meßstelle, durch einen
dem Meßverstärker nachgeschalteten Analog-Digital-Wandler
(11), einen auf den Schwellenwert (13) einstellbaren Trigger (12) und einen vom Trigger (12) betätigten Zähler (15)
sowie durch einen Speicher (16) für die zu erfassenden
digitalisierten Meßwerte und deren zugeordnete Zählimpulse.

Fig. 1

Fig. 2

Fig. 3

Fig. 4

0099001